# EUROPÄISCHE PATENTSCHRIFT

(11) **EP 3 894 793 B1**
(45) Veröffentlichungstag und Bekanntmachung des Hinweises auf die Patenterteilung: **17.04.2024**
(21) Anmeldenummer: 19820722.7
(22) Anmeldetag: 10.12.2019
(51) Int. Cl.: G01D 5/04, G01D 5/20

(54) **SENSOREINHEIT MIT AUS LEITERPLATTEN GEBILDETEN ZAHNRÄDERN**
SENSOR UNIT HAVING GEARWHEELS FORMED FROM A PRINTED CIRCUIT BOARD
UNITÉ DE DÉTECTION COMPORTANT DES ROUES DENTÉES CONSTITUÉE D'UNE CARTE DE CIRCUIT IMPRIMÉ

(30) Priorität: 13.12.2018 DE 102018132097
(43) Veröffentlichungstag der Anmeldung: 20.10.2021
(73) Patentinhaber: thyssenkrupp Presta AG, 9492 Eschen (LI); thyssenkrupp AG, 45143 Essen (DE)
(72) Erfinder: GALEHR, Robert, 9486 Schaanwald (LI); RACZ, Gergely, 1115 Budapest (HU); SEN, Sedat, 9435 Heerbrugg (CH)
(74) Vertreter: thyssenkrupp Intellectual Property GmbH
(86) Internationale Anmeldenummer: PCT/EP2019/084409
(87) Internationale Veröffentlichungsnummer: WO 2020/120468

(56) Entgegenhaltungen:
- DE-A1-102005 050 016
- DE-A1-102014 220 465
- DE-U1-202008 018 076

## Beschreibung

Die vorliegende Erfindung betrifft eine Anordnung umfassend eine Welle und eine Sensoreinheit mit den Merkmalen des Oberbegriffs des Anspruchs 1, insbesondere eine Sensoreinheit zur Bestimmung eines Drehzustandes einer Welle oder ein Kraftfahrzeuglenksystem mit einer solchen Anordnung.

Sensoreinheiten einer derartigen Anordnung können beispielweise zur Bestimmung eines Drehwinkels, eines Drehmoments, einer Drehgeschwindigkeit, einer Drehbeschleunigung, einer Drehlage und/oder einer Drehrichtung anwendbar sein. Derartige Sensoren können in Kraftfahrzeugen unter anderem als Lenkwinkelsensoren eingesetzt werden. Diese messen den Einschlagwinkel des Lenkrades eines Kraftfahrzeuges. Auch bei Drehmomentsensoren kommen Drehwinkelsensoren zum Einsatz. Für beide Aufgaben werden Anordnungen eingesetzt, in denen ein Bauelement mit einer Welle gekoppelt ist, und ein Sensor die Relativdrehung des Bauelements gegenüber dem Sensor erfasst.

Zur Bestimmung der Drehstellung einer Welle bei einer Vielzahl von Umdrehungen der Welle ist aus der DE 10 2005 050 016 A1 ein Multiturn-Drehgeber mit einer Eingangswelle bekannt. An der Eingangswelle ist zur Erfassung ihrer Winkellage drehfest ein erster Codeträger befestigt, der von einer ersten Detektoreinrichtung abtastbar ist. Zudem umfasst der Drehgeber ein Getriebe mit einem eine Winkelcodierung aufweisenden Zahnrad, wobei die Drehzahl des Zahnrads kleiner ist, als die Drehzahl der Eingangswelle. Mit einem Trägerelement, auf welchem eine Erregerwindung und eine Detektorwindung angeordnet sind, kann die Winkelcodierung ausgelesen werden.

Ferner offenbart die DE 10 2014 220 465 A1 eine Sensoranordnung zur Erfassung von Drehwinkeln an einem rotierenden Bauteil. Diese Sensoranordnung umfasst zwei Messwertgeber und zwei Messwertaufnehmer, mittels derer Winkelinformationen erzeugt werden können.

Eine Drehwinkelbestimmungsvorrichtung zur Bestimmung des Drehwinkels einer Lenkungswelle eines Kraftfahrzeugs ist zudem aus der DE 20 2008 018 076 U1 bekannt. Die Drehwinkelbestimmungsvorrichtung weist zur Bestimmung des Drehwinkels einen Hauptrotor und einen mit dem Hauptrotor drehgekoppelten Zusatzrotor auf, wobei jeweils eine Sensoreinheit die Drehwinkelstellung des jeweiligen Rotors bestimmt.

Aus der Offenlegungsschrift EP 1 607 720 A2 ist ein absoluter Lenkwinkelsensor zur Bestimmung des absoluten Lenkwinkels eines Kraftfahrzeugs bekannt. Der Lenkwinkelsensor weist einen mit einer Lenkwelle drehkoppelbaren Antriebsring auf, der über eine Verzahnung in Eingriff mit einem Rotor steht und diesen antreibt. Der Rotor hat auf einer Seite eine fest angeordnete Magnetanordnung. Die Drehung des Rotors bzw. der Magnetanordnung wird mit auf einer Leiterplatte angeordneten Magnetfeldsensoren erfasst. Als nachteilig erweist sich diese Lösung durch die hohe Anzahl an Bauteilen, die für den Lenkwinkelsensor benötigt werden.

Es ist deshalb eine Aufgabe der vorliegenden Erfindung, eine Anordnung mit einer Welle und einer Sensoreinheit anzugeben, die weniger Bauteile benötigt, wodurch Kosten und Bauraum eingespart werden können.

Diese Aufgabe wird von einer Anordnung mit den Merkmalen des Anspruchs 1 gelöst. Vorteilhafte Weiterbildungen ergeben sich aus den Unteransprüchen.

Da die Verzahnung einstückig mit dem Zahnrad ausgebildet ist, können Bauteile und/oder weitere Verarbeitungsschritte eingespart werden. Die Kosten der Sensoreinheit können dadurch gesenkt werden. Es ist auch denkbar und möglich, dass die Getriebeelemente als Mitnehmer ausgebildet sind, welche zumindest temporär formschlüssig miteinander in Eingriff stehen.

Bevorzugt ist das Zahnrad oder die Verzahnung mit einer Beschichtung versehen, welche wenigstens MoSz, PTFE, Grafit oder PE-UHMW enthält. Erfindungsgemäß weisen die zwei Zahnräder jeweils eine auf einer der Sensoreinheit zugewandten Stirnseite elektrisch leitende Spur auf, wobei die Sensoreinheit dazu eingerichtet ist, die beiden Spuren zur Messung des Drehzustands der Welle induktiv abzufragen. Dabei sind die beiden elektrisch leitenden Spuren vorzugsweise in sich geschlossen und asymmetrisch zu einer entsprechenden Drehachse des Zahnrades ausgebildet, derart, dass über eine Wellenumdrehung eine absolute Winkelbestimmung möglich ist. Die beiden Spuren sind vorzugsweise aus Kupfer gebildet. Weiterhin ist es denkbar und möglich, dass diese aus Aluminium, Silber, Zinn, Nickel und/oder Gold gebildet sind. Die Sensoreinheit umfasst vorteilhafterweise Spulen, die den beiden Zahnrädern zugewiesen werden können und die vorzugsweise auf einer gemeinsamen Trägerplatte angeordnet sind. Bevorzugt sind die Spulen jeweils Teile eines Schwingkreises und erzeugen ein hochfrequentes Magnetfeld. Die Spuren sind vorzugsweise kreisförmig und weisen jeweils eine Breite in Radialrichtung, in der Ebene der Stirnfläche der Zahnräder auf, die entlang des Kreisumfangs über einen ersten Halbkreis gleichmäßig zunimmt und über den zweiten Halbkreis wieder gleichmäßig abnimmt. Die Zuwachs- und Abnahmerate der Breite ist dabei jeweils stetig und konstant über den gesamten Umfang. Bevorzugt handelt es sich bei dem Getriebe um ein einstufiges Stirnradgetriebe. Vorzugsweise ist die Anzahl der Zähne der beiden Zahnräder unterschiedlich. Dabei weist das erste Zahnrad bevorzugt mindestens 3-mal mehr Zähne auf als das zweite Zahnrad, weiter bevorzugt 4-mal mehr Zähne als das zweite Zahnrad. Eines der Zahnräder umgibt die Welle konzentrisch und ist mit dieser drehfest verbunden.

In einer vorteilhaften Ausführungsform hat das Getriebe eine Übersetzung kleiner 1.

Es kann vorgesehen sein, dass die Zähne der wenigstens zwei Getriebeelemente eine evolvente, epi-/hypozykloide oder Triebstockverzahnung aufweisen. Die Verzahnung kann achsparallel, schräg oder als Bogenverzahnung ausgestaltet sein. Weiterhin ist es denkbar und möglich, dass die Zähne als Malteserkreuz ausgebildet sind.

Weiterhin ist eine entsprechende Anordnung umfassend eine Welle und eine Sensoreinheit vorgesehen, wobei die Sensoreinheit eine Kraftfahrzeug-Sensoreinheit oder eine Kraftfahrzeuglenksystem-Sensoreinheit ist.

Die Aufgabe wird zudem von einem Kraftfahrzeuglenksystem mit einer zuvor beschriebenen Anordnung aus Welle und Sensoreinheit gelöst.

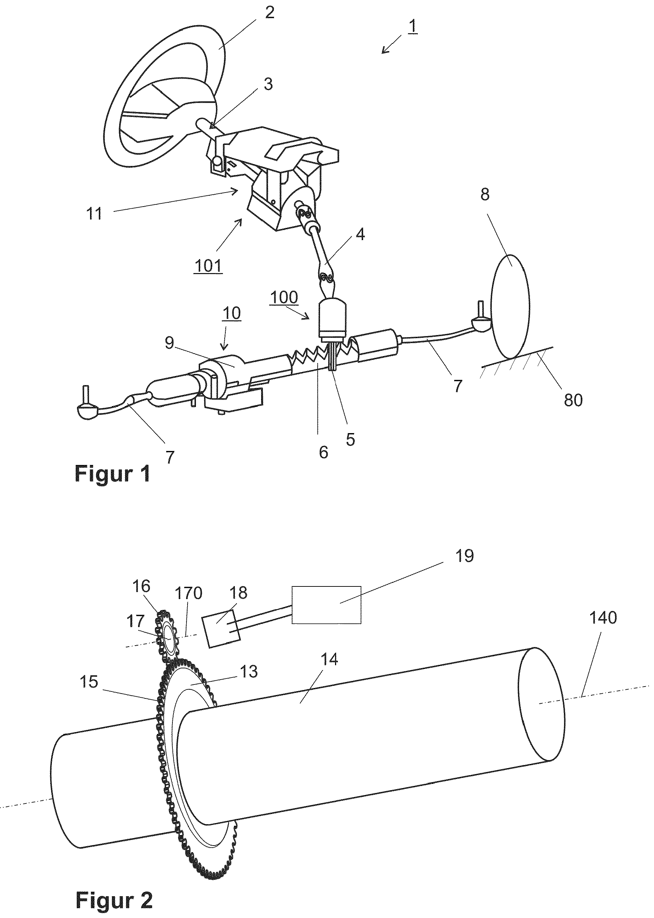

Bevorzugte Ausführungsformen der Erfindung werden nachfolgend anhand der Zeichnungen näher erläutert. Gleiche bzw. funktionsgleiche Bauteile sind dabei figurübergreifend mit denselben Bezugszeichen versehen. Es zeigen:
Drehmoment wird dann über die obere Lenkwelle 3 und untere Lenkwelle 4 auf ein Lenkritzel 5 übertragen. Das Ritzel 5 kämmt in bekannter Weise mit einem Zahnsegment einer Zahnstange 6. Die Zahnstange 6 ist in einem Lenkungsgehäuse in Richtung ihrer Längsachse verschieblich gelagert. An ihrem freien Ende ist die Zahnstange 6 mit Spurstangen 7 über nicht dargestellte Kugelgelenke verbunden. Die Spurstangen 7 selbst sind in bekannter Weise über Achsschenkel mit je einem gelenkten Rad 8 des Kraftfahrzeugs verbunden. Eine Drehung des Lenkrades 2 führt über die Verbindung der Lenkwelle 3 und des Ritzels 5 zu einer Längsverschiebung der Zahnstange 6 und damit zu einer Verschwenkung der gelenkten Räder 8. Die gelenkten Räder 8 erfahren über eine Fahrbahn 80 eine Rückwirkung, die der Lenkbewegung entgegen wirkt. Zum Verschwenken der Räder 8 ist folglich eine Kraft erforderlich, die ein entsprechendes Drehmoment am Lenkrad 2 erforderlich macht. Ein Elektromotor 9 einer Servoeinheit 10 ist vorgesehen, um den Fahrer bei dieser Lenkbewegung zu unterstützen. Die obere Lenkwelle 3 und die untere Lenkwelle 4 sind drehelastisch über einen nicht gezeigten Drehstab miteinander gekoppelt. Eine Drehmomentsensoreinheit 11 erfasst die Verdrehung der oberen Lenkwelle 3 gegenüber der unteren Lenkwelle 4 als ein Maß des an der Lenkwelle 3 oder des Lenkrades 2 manuell ausgeübten Drehmomentes. In Abhängigkeit des von der Drehmomentsensoreinheit 11 gemessen Drehmoments stellt die Servoeinheit 10 eine Lenkunterstützung für den Fahrer bereit. Die Servoeinheit 10 kann dabei als Hilfskraftunterstützungseinrichtung 10, 100, 101 entweder mit der gekoppelt sein. Die jeweilige Hilfskraftunterstützung 10, 100, 101 trägt ein Hilfskraftmoment in die Zahnstange 6, das Lenkritzel 5 und/oder die Lenkwelle 3 ein, wodurch der Fahrer bei der Lenkarbeit unterstützt wird. Die drei unterschiedlichen in Figur 1 dargestellten Hilfskraftunterstützungseinrichtungen 10, 100, 101 zeigen alternative Positionen für deren Anordnung. Üblicherweise ist nur eine einzige der gezeigten Positionen mit einer Hilfskraftunterstützung belegt.

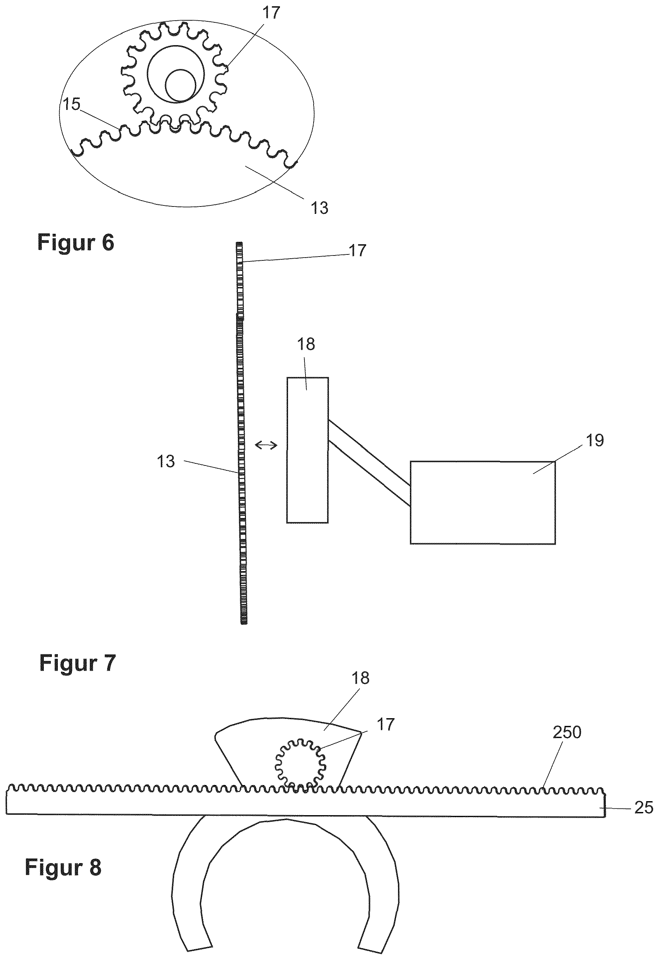

Figur 2 und Figur 7 zeigen schematisch eine Sensoreinheit, welche in diesem Ausführungsbeispiel eine Drehwinkelsensoreinheit 12 darstellt, die dazu vorgesehen sein kann, beispielsweise als Teil der Drehmomentsensoreinheit 11 den Drehwinkel der Lenkwelle 3,4 zu messen. Ein erstes Zahnrad 13 ist mit einer Welle 14, insbesondere der Lenkwelle, drehfest verbunden und umgibt diese konzentrisch. Das erste Zahnrad 13 weist eine nach außen gerichtete Verzahnung 15 auf, die konzentrisch zur Wellenachse 140 angeordnet ist. Diese erste Verzahnung 15 des ersten Zahnrades 13 greift in eine zweite umlaufende nach außen gerichtete Verzahnung 16 eines zweiten Zahnrads 17 ein, dass sich auf dem ersten Zahnrad 15 abwälzt. Das zweite Zahnrad 17 dreht sich um eine zweite Zahnradachse 170, die parallel und versetzt zur Wellenachse 140 angeordnet und raumfest ist. Die Drehbewegung der Welle 14 wird somit auf das zweite Zahnrad 17 übertragen. Eine Sensoreinheit 18 misst die Rotationen des ersten und des zweiten Zahnrades 13,17 und gibt die gemessenen Signale an eine Steuereinheit 19 weiter, die daraus einen absoluten Drehwinkel der Welle 14 bestimmen kann.

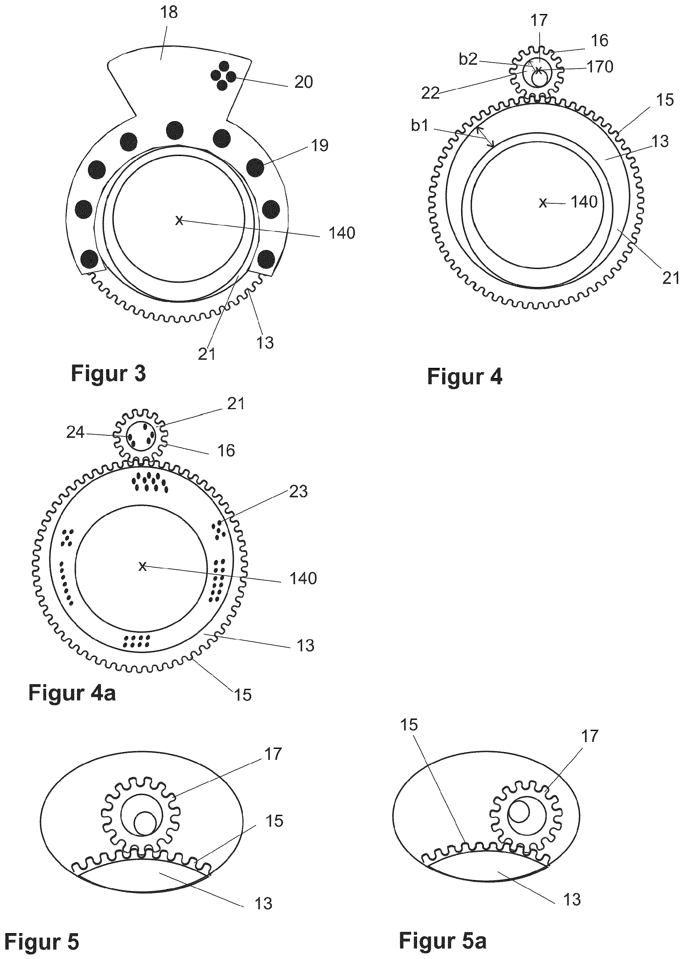

In der Figur 3 ist eine induktive Sensoreinheit 18 mit darunter liegendem ersten Zahnrad 13 gezeigt. Die Sensoreinheit 18 umfasst eine Vielzahl an Spulen, die auf einer gemeinsamen Trägerplatte angeordnet sind und in zwei Gruppen unterteilt sind; eine erste Gruppe 19 zur Messung der Drehung des ersten Zahnrades 13 und eine zweite Gruppe 20 zur Messung der Drehung des zweiten Zahnrades 17. Die Spulen der ersten Gruppe 19 sind gleichmäßig beabstandet über einen Kreissektor in Umfangsrichtung über dem ersten Zahnrad 13 liegend angeordnet. Die Spulen der zweiten Gruppe 20 liegen über einer Stirnseite des nicht dargestellten zweiten Zahnrades 17 in einem gleichmäßigen Abstand, in Umfangsrichtung des zweiten Zahnrades 17 verteilt. Die beiden Zahnräder 13,17 weisen jeweils eine elektrisch leitende Spur 21,22 auf, die sich gegenüber den Spulen 19,20 bewegt. Die Spuren 21,22 sind bevorzugt aus Kupfer. Die Spulen der ersten und zweiten Gruppe 19,20 sind jeweils Teile eines Schwingkreises. Sie erzeugen ein hochfrequentes Magnetfeld. Wenn sich die zugeordnete Spur 21,22 in dem jeweiligen Magnetfeld bewegt, beginnt aufgrund der elektromagnetischen Induktion ein Induktionsstrom zu fließen. Basierend auf der gegenseitigen Induktivitätskopplung ändert sich die Resonanzfrequenz des Schwingkreises. Nähert sich ein Nichteisen-Metallobjekt, wie beispielsweise die Kupferspur, steigt die Resonanzfrequenz des elektrischen Schwingkreises. Die gegenseitige Induktivitätskopplung ändert sich somit, wenn sich die Spur 21,22 über die Spulen 19,20 hinweg dreht. Die Rotationen des ersten und zweiten Zahnrades 13,17 können so durch die Sensoreinheit erfasst werden.

In der Figur 4 sind im Detail die beiden in Eingriff stehenden Zahnräder 13,17 dargestellt. Die Spuren der beiden Zahnräder 21,22 sind in sich geschlossen und weisen keinen Anfang und kein Ende auf. Das Muster beziehungsweise die Oberflächenstruktur der beiden Spuren 21,22 ist so ausgebildet, dass damit über eine Wellenumdrehung eine absolute Winkelbestimmung möglich ist. Es ist nicht konzentrisch zur jeweiligen Drehachse 140,170 der Zahnräder 14,17 ausgebildet. Die Spuren 21,22 sind kreisförmig und weisen jeweils eine Breite b1,b2 in Radialrichtung, in der Ebene der Stirnfläche der Zahnräder auf, die entlang des Kreisumfangs über einen ersten Halbkreis gleichmäßig zunimmt und über den zweiten Halbkreis wieder gleichmäßig abnimmt. Die Zuwachs- und Abnahmerate der Breite ist dabei jeweils stetig und konstant über den gesamten Umfang. Der Mittelpunkt des Kreises ist nicht identisch mit der Drehachse des entsprechenden Zahnrades 140,170. Die Anzahl der Zähne des zweiten Zahnrades 17 ist kleiner als die Anzahl der Zähne des ersten Zahnrades 13. Die Anzahl der Zähne des ersten Zahnrades 13 ist kein ganzes Vielfaches der Anzahl der Zähne des zweiten Zahnrades 17. Dabei weist das erste Zahnrad bevorzugt mindestens 3-mal mehr Zähne auf als das zweite Zahnrad, weiter bevorzugt 4-mal mehr Zähne als das zweite Zahnrad. Die Zahnräder 13,17 bilden mit ihrer Außenverzahnung 15,16 die Leiterplatten. Die Leiterplatten weisen weiterhin wenigstens eines der folgenden Bauteile auf: wenigstens einen elektrischen Widerstand, wenigstens einen Kondensator, wenigstens eine Diode und/oder wenigstens einen Transistor. Die Verzahnung 15,16 ist somit unmittelbar durch die jeweilige Leiterplatte gebildet. Ein Aufbringen eines Materials auf die Stirnseiten zur Ausbildung der Verzahnung ist gerade nicht vorgesehen. Die beiden Zahnräder 13,17 stehen daher in Anlage mittels der Leiterplatten. Auf den Leiterplatten wird die jeweilige Spur 21,22, eine Oberflächenstruktur 23,24 oder eine Leiterbahn aufgebracht. Die Leiterplatte besteht bevorzugt aus faserverstärktem Kunststoff.

Figur 4a zeigt, dass beide Zahnräder zusätzlich zur Spur 21,22 eine Oberflächenstruktur 23, 24 aufweisen können, mittels welcher der Drehzustand der Welle 14 genauer detektierbar ist.

Wie in den Figuren 5 und 5a dargestellt, wälzt sich das kleine Zahnrad 17 auf der Verzahnung des großen Zahnrads 13 bei Drehung der Welle ab. Für jedes der beiden Zahnräder 13,17 erlaubt die Spur 21,22 eine absolute Drehwinkelmessung über 180°. Durch Kombination der beiden Signale kann der Drehwinkel über 360° absolut bestimmt werden. Dabei zeigt Figur 5a das Abwälzen des kleinen Zahnrads gegenüber dem großen Zahnrad.

Figur 6 zeigt eine weitere Sensorverzahnung, die ebenfalls als einstufiges Stirnradgetriebe ausgebildet ist, wobei die Zahnräder 13,17 über eine Triebstockverzahnung miteinander in Eingriff stehen.

In der Figur 8, einer nicht erfindungsgemäßen Ausführungsform, ist eine lineare Ausbildung der Sensoranordnung in Form eines Zahnstangengetriebes 25 dargestellt, bei dem sich ein Zahnrad 17 auf einer Verzahnung 250 einer Zahnstange 25 abwälzt und somit die Drehung des Zahnrades 17 in eine lineare Bewegung der Zahnstange und vice versa umgewandelt werden kann. Die Sensoreinheit 18 misst dabei die Drehung des Zahnrads 17.

Die Verzahnung 15,16 der zuvor beschriebenen Getriebe kann beispielsweise als evolvente Verzahnung, epi-/hypozykloide Verzahnung oder als Triebstockverzahnung ausgestaltet sein.

Neben Getrieben mit gleichmäßiger Übersetzung können die Zahnräder auch in Schrittgetrieben eingesetzt sein.

## Patentansprüche

1. Anordnung umfassend eine Welle (14) mit einer Wellenachse (140) und eine Sensoreinheit (12) zur Messung eines Drehzustandes der Welle (14) aufweisend ein mit der Welle (14) verbundenes Getriebe, wobei das Getriebe ein erstes Zahnrad (13) und ein zweites Zahnrad (17) aufweist, die über eine erste Verzahnung (15) und eine zweite Verzahnung (16) in Eingriff miteinander stehen, und wobei die Drehung des ersten Zahnrades (13) um eine der Wellenachse (140) entsprechenden Drehachse von der Sensoreinheit (18) detektiert wird, wobei das erste Zahnrad (13) und die erste Verzahnung (15) des ersten Zahnrades (13) durch eine Leiterplatte gebildet sind, wobei das erste Zahnrad (13) mit der Welle (14) drehfest verbunden ist und die Welle (14) konzentrisch umgibt, wobei die erste Verzahnung (15) des ersten Zahnrades (13) nach außen gerichtet und konzentrisch zur Wellenachse (140) angeordnet ist und in die zweite, umlaufende, nach außen gerichtete Verzahnung (16) des zweiten Zahnrades (17) eingreift, wobei das zweite Zahnrad (17) drehbar um eine Zahnradachse (170), die parallel und versetzt zur Wellenachse 140 angeordnet und raumfest ist, angeordnet ist, wobei auch das zweite Zahnrad (17) und die zweite Verzahnung (16) des zweiten Zahnrades (17) durch eine Leiterplatte gebildet sind, wobei zudem die Drehung des zweiten Zahnrades (17) um eine der Zahnradachse (170) entsprechenden Drehachse von der Sensoreinheit (18) detektiert wird, wobei die zwei Zahnräder (13,17) jeweils eine auf einer der Sensoreinheit (18) zugewandten Stirnseite elektrisch leitende Spur (21,22) aufweisen, wobei die Sensoreinheit (18) dazu eingerichtet ist, die beiden Spuren (21,22) zur Messung des Drehzustands der Welle (14) induktiv abzufragen.

2. Anordnung nach Anspruch 1, **dadurch gekennzeichnet, dass** die beiden elektrisch leitenden Spuren (21,22) in sich geschlossen sind und asymmetrisch zu einer entsprechenden Drehachse (140,170) des jeweiligen Zahnrades (13,17) ausgebildet sind, so dass über eine Wellenumdrehung eine absolute Winkelbestimmung möglich ist.

3. Anordnung nach Anspruch 1 oder 2, **dadurch gekennzeichnet, dass** die Anzahl der Zähne der beiden Zahnräder (13,17) unterschiedlich ist.

4. Anordnung nach einem der vorhergehenden Ansprüche, **dadurch gekennzeichnet, dass** die beiden Spuren (21,22) aus Kupfer gebildet sind.

5. Anordnung nach einem der vorhergehenden Ansprüche, **dadurch gekennzeichnet, dass** das Getriebe eine Übersetzung kleiner 1 hat.

6. Anordnung nach einem der vorhergehenden Ansprüche, **dadurch gekennzeichnet, dass** das Getriebe ein einstufiges Stirnradgetriebe ist.

7. Anordnung nach einem der vorhergehenden Ansprüche, **dadurch gekennzeichnet, dass** die Zähne der zwei Zahnräder (13,17) eine evolvente, epi-/hypozykloide oder Triebstockverzahnung (15,16) aufweisen.

8. Anordnung nach einem der vorhergehenden Ansprüche, **dadurch gekennzeichnet, dass** die Sensoreinheit (12) eine Kraftfahrzeug-Sensoreinheit ist.

9. Anordnung nach einem der Ansprüche 1 bis 7, **dadurch gekennzeichnet, dass** die Sensoreinheit (12) eine Kraftfahrzeuglenksystem-Sensoreinheit ist.

10. Kraftfahrzeuglenksystem mit einer Anordnung gemäß einem der vorhergehenden Ansprüche 1 bis 7.

## Claims

1. Arrangement comprising a shaft (14) with a shaft axis (140) and a sensor unit (12) for measuring a rotational state of the shaft (14), having a transmission which is connected to the shaft (14), wherein the transmission has a fist gearwheel (13) and a second gearwheel (17) which are in engagement with one another via a first toothing (15) and a second toothing (16) and wherein the rotation of the first gearwheel (13) about a rotational axis (140, 170), which corresponds to the shaft axis (140), is detected by the sensor unit (18), wherein the first gearwheel (13) and the first toothing (15) of the first gearwheel (13) are formed by a printed circuit board, wherein the first gearwheel (13) surrounds the shaft (14) concentrically and is connected thereto in a torque-proof manner, wherein the first toothing (15) of the first gearwheel (13) is directed outwards and arranged concentrically to the shaft axis (140) and engages in the second circumferential outwardly directed toothing (16) of the second gearwheel (17), wherein the second gearwheel (17) is rotatable about a gearwheel axis (170), which is arranged parallel and offset to the shaft axis (140) and is fixed in space, the second gearwheel (17) and the second toothing (16) of the second gearwheel (17) also being formed by a printed circuit board, wherein the rotation of the second gearwheel (17) about an axis of rotation corresponding to the gearwheel axis (170) is detected by the sensor unit (18) in addition, wherein the two gearwheels (13, 17) each have an electrically conductive track (21, 22) on an end side facing the sensor unit (18), wherein the sensor unit (18) is configured to scan the two tracks (21, 22) inductively in order to measure the rotational state of the shaft (14).

2. The arrangement as claimed in claim 1, **characterized in that** the two electrically conductive tracks (21, 22) are closed on themselves and are formed asymmetrically with respect to a corresponding rotational axis (140, 170) of each gearwheel (13, 17), so that an absolute angle determination is possible over one rotation of the shaft.

3. The arrangement as claimed in claim 1 or 2, **characterized in that** the number of teeth of the two gearwheels (13, 17) is different.

4. The arrangement as claimed in one of the preceding claims, **characterized in that** the two tracks (21, 22) are formed from copper.

5. The arrangement as claimed in one of the preceding claims, **characterized in that** the transmission has a transmission ratio of less than 1.

6. The arrangement as claimed in one of the preceding claims, **characterized in that** the transmission is a single-stage helical gear unit.

7. The arrangement as claimed in one of the preceding claims, **characterized in that** the teeth of the two gearwheels (13, 17) have an involute, epi-/hypocycloid or cylindrical lantern gear toothing (15, 16).

8. The arrangement as claimed in one of the preceding claims, **characterized in that** the sensor unit (12) is a motor vehicle sensor unit.

9. The arrangement as claimed in one of claims 1 to 7, **characterized in that** the sensor unit (12) is a motor vehicle steering system sensor unit.

10. A motor vehicle steering system having an arrangement as claimed in one of the preceding claims 1 to 7.

## Revendications

1. Dispositif comprenant un arbre (14) avec un axe d'arbre (140) et une unité de capteur (12) pour mesurer un état de rotation de l'arbre (14), avec une transmission qui est connectée à l'arbre (14), dans lequel la transmission a une première roue dentée (13) et une deuxième roue dentée (17) qui sont en prise l'une avec l'autre par l'intermédiaire d'une première denture (15) et d'une deuxième denture (16) et dans lequel la rotation de la première roue dentée (13) autour d'un axe de rotation (140, 170), qui correspond à l'axe de l'arbre (140), est détectée par l'unité de détection (18), dans laquelle la première roue dentée (13) et la première denture (15) de la première roue dentée (13) sont formées par une carte de circuit imprimé, dans laquelle la première roue dentée (13) entoure l'arbre (14) de manière concentrique et est reliée à celui-ci de manière étanche au couple, la première denture (15) de la première roue dentée (13) est orientée vers l'extérieur et disposée concentriquement à l'axe de l'arbre (140) et s'engage dans la deuxième denture (16) orientée vers l'extérieur de la deuxième roue dentée (17), la deuxième roue dentée (17) peut tourner autour d'un axe de roue dentée (170) parallèle et décalé par rapport à l'axe de l'arbre (140) et fixe dans l'espace, la deuxième roue dentée (17) et la deuxième denture (16) de la deuxième roue dentée (17) étant également constituées d'une carte de circuit imprimé, la rotation de la deuxième roue dentée (17) autour d'un axe de rotation correspondant à l'axe de la roue dentée (170) est détectée par l'unité de détection (18), les deux roues dentées (13, 17) ayant chacune une piste conductrice d'électricité (21, 22) sur un côté d'extrémité faisant face à l'unité de détection (18), l'unité de détection (18) étant configurée pour balayer les deux pistes (21, 22) par induction afin de mesurer l'état de rotation de l'arbre (14).

2. Dispositif selon la revendication 1, **caractérisé par le fait que** les deux pistes conductrices d'électricité (21, 22) sont fermées sur elles-mêmes et sont formées de manière asymétrique par rapport à un axe de rotation correspondant (140, 170) de chaque roue dentée (13, 17), de sorte qu'une détermination absolue de l'angle est possible sur une rotation de l'arbre.

3. Dispositif selon la revendication 1 ou 2, **caractérisé par le fait que le** nombre de dents des deux roues dentées (13, 17) est différent.

4. Dispositif selon l'une des revendications précédentes, **caractérisé par le fait que** les deux pistes (21, 22) sont en cuivre.

5. Dispositif selon l'une des revendications précédentes, **caractérisé par le fait que** la transmission a un rapport de transmission inférieur à 1.

6. Dispositif selon l'une des revendications précédentes, **caractérisé par le fait que** la transmission est un réducteur à engrenages hélicoïdaux à un étage.

7. Dispositif selon l'une des revendications précédentes, **caractérisé en ce que** les dents des deux roues dentées (13, 17) ont une denture en développante, épi-/hypocycloïde ou cylindrique à lanterne (15, 16).

8. Dispositif selon l'une des revendications précédentes, **caractérisé par le fait que** l'unité de détection (12) est une unité de détection de véhicule automobile.

9. Dispositif selon l'une des revendications 1 à 7, **caractérisé par le fait que** l'unité de capteur (12) est une unité de capteur du système de direction d'un véhicule automobile.

10. Système de direction d'un véhicule automobile comportant un dispositif selon l'une des revendications précédentes 1 à 7.
